## Europäisches Patentamt

## European Patent Office

## Office européen des brevets

(11) Veröffentlichungsnummer: **0 178 498**
**B1**

(12) **EUROPÄISCHE PATENTSCHRIFT**

(45) Veröffentlichungstag der Patentschrift: 22.08.90

(21) Anmeldenummer: 85112076.6

(22) Anmeldetag: 24.09.85

(51) Int. Cl.[5]: **C 01 G 1/00, C 01 G 49/00, C 01 G 31/00, C 01 G 37/00, C 01 G 43/00**

(54) Verfahren zur Reduktion von Metallionen in wässrigen Lösungen.

(30) Priorität: 15.10.84 DE 3437686

(43) Veröffentlichungstag der Anmeldung:
23.04.86 Patentblatt 86/17

(45) Bekanntmachung des Hinweises auf die Patenterteilung:
22.08.90 Patentblatt 90/34

(84) Benannte Vertragsstaaten:
BE FR GB NL

(56) Entgegenhaltungen:
US-A-3 421 845
US-A-4 374 805

CHEMICAL ABSTRACTS, Band 97, Teil 8, 23. August 1982, Seite 205, Zusammenfassung Nr. 59127c, Columbus, Ohio, US; Y.I. SUKHARNIKOV et al.: "Reduction of alloying metals in the presence of phosphorus", & DIFFUZ. SORBTSIYA FAZOUYE PREVRASHCH. PROTSESSAKH VOSSTANOV. MET. MATER. VSES. KONF.r 1978 (PUB. 1981), 92-5

(73) Patentinhaber: HOECHST AKTIENGESELLSCHAFT
Postfach 80 03 20
D-6230 Frankfurt am Main 80 (DE)

(72) Erfinder: Roos, Wouter
Dorpsplein 30
NL-4443 Nisse (NL)
Erfinder: Damman, Bernardus Johannes
Oude Vlissingseweg 62
NL-4336 Middelburg (NL)
Erfinder: Lagendijk, Arie
Vlissingsestraat 71
NL-4388 Oost-Souburg (NL)
Erfinder: Steidl, Dieter
Ulmenstrasse 8
D-6238 Hofheim (DE)
Erfinder: VON Schenck, Raban, Dr.
Ulmenstrasse 34
D-6238 Hofheim (DE)

## Beschreibung

Die vorliegende Erfindung betrifft ein Verfahren zur Reduktion von Metallionen höherer Oxydationsstufen zu deren hiederen Oxydationsstufen mit Hilfe eines Reduktionsmittels in wäßrigen Lösungen.

Es ist allgemein bekannt, daß man Metalle, welche in wäßrigen Lösungen in Form von Ionen unterschiedlich hoher Oxydationsstufen vorliegen können, mit Hilfe von Reduktionsmitteln zu ihren niedrigeren Oxydationsstufen reduzieren kann.

Als Reduktionsmittel werden dabei in erster Linie Eisen, z.B. in Form von Eisenspänen, Zink, Aluminium, Sulfide, Sulfite, Hydrazin usw. verwendet.

Nachteilig an diesen bekannten Reduktionsmitteln ist, daß diese Mittel in ihrer Wirkung vom jeweiligen Säuregrad der Lösungen abhängig sind, und daß dabei von den Metallen Wasserstoff entwickelt wird.

Überraschenderweise wurde nun gefunden, daß sich diese Nachteile vermeiden lassen, wenn man als Reduktionsmittel Ferrophosphor einsetzt.

Zur Erhöhung der Reduktionsgeschwindigkeit empfiehlt es sich, den Ferrophosphor mit einer Korngröße kleiner als 100 µm, vorzugsweise kleiner als 10 µm, zu verwenden. Auch durch Erhöhen der Reaktionstemperatur auf mehr als 60°C läßt sich die Reaktionsgeschwindigkeit steigern.

Von besonderer Bedeutung ist auch, daß sich die Reduktion nicht nur in einem sauren, sondern auch in einem neutralen oder alkalischen Medium durchführen läßt, und zwar sogar bei pH-Werten, die bei 9 und höher liegen.

Erstaunlich und für einen Fachmann nicht vorhersehbar war ferner, daß sich mit Hilfe des Ferrophosphors in einer Rohphosphorsäure (45—50% $P_2O_5$) ein niedriges Redoxpotential von weniger als —150 mV erzielen läßt, und daß im sauren Bereich praktisch keine Wasserstoffentwicklung zu verzeichnen ist, da wo die bis jetzt bekannten Reduktionsmittel, wie z.B. Eisenspäne oder Hydroxymethansulfinate, ein Redoxpotential von +170 mV als Endpunkt haben.

Beispielsweise kann die Reduktion in einem chlorwasserstoff-, schwefel- oder phosphorsauren Milieu erfolgen.

Das erfindungsgemäße Verfahren ist geeignet, für die Reduktion höherwertiger Metallionen wie beispielsweise von Ionen des Eisens, Vanadiums, Chroms oder Urans, wobei diese Ionen auch im Gemisch miteinander oder mit anderen Ionen vorliegen können.

Die nachfolgenden Beispiele sollen die Wirkungsweise des erfindungsgemäßen Verfahrens veranschaulichen, ohne den Erfingungsgegenstand auf den Inhalt dieser Beispiele beschränken zu wollen.

| Beispiele | Redoxpotential am Anfang | Konz. Metallionen im Ausgangsprodukt | wäßrige Lösung | Reduktions-mittel Dosierung Gew% | Redoxpoential nach der Reduktion | Konz. reduzierter Metallionen |
|---|---|---|---|---|---|---|
| 1 | +830 mV | $Fe^{3+}$ 0,331% $V^{5+}$ 426 ppm $Cr^{6+}$ 389 ppm | HCl 12% | Ferrophosphor 0,8% | −130 mV | $Fe^{2+}$ 0,607% $Fe^{3+}$ 0,013% $V^{5+}$ nicht nachweisbar $V^{4/3}$ 439 ppm $Cr^{3+}$ 457 ppm |
| 2 | +618 mV | $V^{5+}$ 329 ppm | $H_2SO_4$ 75% | Ferrophosphor 0,8% | +280 mV | $V^{5+}$ nicht nachweisbar $V^{3/4}$ 314 ppm |
| 3 | +490 mV | $V^{5+}$ 640 ppm $Cr^{6/3}$ 589 ppm $Fe^{3+}$ 0,28% | roh $H_3PO_4$ 65% | Ferrophosphor 0,8% | −180 mV | $V^{3+}$ 620 ppm $V^{5+}$ nicht nachweisbar $Cr^{6+}$ nicht nachweisbar $Fe^{2+}$ 0,61% $Fe^{3+}$ <0,003% |
| 4 | −384 mV | $V^{5+}$ 200 ppm $Fe^{3+}$ 200 ppm | $Na_2HPO_4$ 36% pH≈8,9 | Ferrophosphor 0,05% <10 µm | −780 mV | $Fe^{3+}$ $V^{5+}$ nicht nachweisbar |
| 5 | +475 mV | $Fe^{3+}$ 0,225% +V+Cr | roh $H_3PO_4$ 66% | Na-hydroxy-methansulfinat 0,8% | +220 mV | $Fe^{3+}$ 0,013% |

3

# EP 0 178 498 B1

**Patentansprüche**

1. Verfahren zur Reduktion von Metallionen höherer Oxydationsstufen zu deren niederen Oxydationsstufen mit Hilfe eines Reduktionsmittels in wäßrigen Lösungen, dadurch gekennzeichnet, daß man als Reduktionsmittel Ferrophosphor einsetzt.

2. Verfahren nach Anspruch 1, dadurch gekennzeichnet, daß man den Ferrophosphor in Korngrößen kleiner als 100 µm einsetzt.

3. Verfahren nach Anspruch 2, dadurch gekennzeichnet, daß man den Ferrophosphor in Korngrößen kleiner als 10 µm einsetzt.

4. Verfahren nach einem der Ansprüche 1 bis 3, dadurch gekennzeichnet, daß man die Reduktion bei Temperaturen von mehr als 60°C durchführt.

5. Verfahren nach einem der Ansprüche 1 bis 4, dadurch gekennzeichnet, daß man die Reduktion in einem sauren, neutralen oder alkalischen Medium durchführt.

**Revendications**

1. Procédé pour la réduction d'ions métalliques de degrés d'oxydation supérieurs à leurs degrés d'oxydation inférieurs en solutions aqueuses à l'aide d'un agent réducteur, caractérisé en ce que l'on utilise comme agent réducteur le ferrophosphore.

2. Procédé selon la revendication 1, caractérisé en ce que l'on utilise le ferrophosphore à des grosseurs de grains de moins de 100 µm.

3. Procédé selon la revendication 2, caractérisé en ce que l'on utilise le ferrophosphore à des grosseurs de grains de moins de 10 µm.

4. Procédé selon l'une des revendications 1 à 3, caractérisé en ce que l'on met en oeuvre la réduction à des températures de plus de 60°C.

5. Procédé selon l'une des revendications 1 à 4, caractérisé en ce que l'on met oeuvre la réduction dans un milieu acide, neutre ou alcalin.

**Claims**

1. A process for the reduction of metal ions of higher oxidation states to their lower oxidation states with the aid of a reductant in aqueous solutions, which comprises employing ferrophosphorus as the reductant.

2. The process as claimed in claim 1, wherein the ferrophosphorus is employed in particle sizes less than 100 µm.

3. The process as claimed in claim 2, wherein the ferrophosphorus is employed in particle sizes less than 10 µm.

4. The process as claimed in any one of claims 1 to 3, wherein the reduction is carried out at temperatures of more than 60°C.

5. The process as claimed in any one of claims 1 to 4, wherein the reduction is carried out in an acid neutral or alkaline medium.

4